# EUROPEAN PATENT APPLICATION

(11) **EP 1 919 145 A2**
(43) Date of publication of application: **07.05.2008**
(21) Application number: 07251424.3
(22) Date of filing: 30.03.2007
(51) Int. Cl.: H04L 12/56

(54) **Storage system and communication bandwidth control method**

(30) Priority: 31.10.2006 JP 2006296287
(71) Applicant: Hitachi, Ltd., Chiyoda-ku Tokyo 100-8280 (JP)
(72) Inventor: Miyamoto, Kenichi, Tokyo 100-8220 (JP)
(74) Representative: Hodsdon, Stephen James

(57) **Abstract**

An object of the present invention is to efficiently perform load balancing between Fibre Channel switches and storage apparatuses, avoiding communication congestion, and maintaining high system performance.

An aspect of the present invention provides a method for controlling a communication bandwidth between a network switch (21) having a plurality of ports for forming a network, and a storage apparatus (4) having ports respectively connected to at least two of the ports, the method including: transferring one or more data frames to the storage apparatus via a first port of the network switch connected to the storage apparatus; determining whether or not an overflow has occurred in a first buffer memory associated with the first port during the transfer of the one or more data frames; identifying, if an overflow has occurred in the first buffer memory, a second port of the network switch connected to the storage apparatus; and transferring the one or more data frames to the storage apparatus via the first port and the second port.

## Description

This application relates to and claims priority from Japanese Patent Application No. 2006-296287, filed on October 31, 2006, the entire disclosure of which is incorporated herein by reference.

The invention relates to a storage system including network switches forming a network, and a storage apparatus, and also to a technique for controlling a communication bandwidth on the network.

A SAN is known as a network that connects host apparatuses and storage apparatuses for storage access. Since a SAN ensures reliable packet transmission at a relatively low level layer in a network layer model, a Fibre Channel (or Fibre Channel protocol) is often employed.

One of the topologies for a Fibre Channel is the fabric topology, which mainly includes Fibre Channel switches (FC-SWs). This topology has scalability, and makes it possible to form a large-scale fabric by interconnecting the Fibre Channel switches.

A Fibre Channel switch generally has a load balancing (MPLB) function that distributes I/O data among a plurality of paths (links) in the Fibre Channel switches. This load balancing function makes it possible to treat the physical links between the multiple Fibre Channel switches as one logical path and efficiently use the communication bandwidth without the data being concentrated on a particular link.

In recent years, SANs using IP protocol have also become popular. For a SAN using IP-protocol, for example, JP2006-108955 A proposes a technique that resolves nonconformity between the communication bandwidth for the link to the host apparatus or storage apparatus, and that for the link between the routers. In other words, JP2006-108955 A discloses a communication bandwidth control technique that obtains communication bandwidth information regarding multiple sessions established between a server apparatus and a storage apparatus, allocates at least a part of the communication bandwidth for a session to another session with insufficient communication bandwidth.

However, the aforementioned conventional fiber channel switches' load balancing function has only been used between interconnected Fibre Channel switches, and has not been used between Fibre Channel switches and storage apparatuses. Accordingly, when I/O data has been efficiently transmitted between the Fibre Channel switches by means of the load balancing function, if I/O data is concentrated in one storage apparatus, or if there is a discrepancy between the host apparatus-side communication bandwidth and the storage apparatus-side communication bandwidth, the overall system performance may deteriorate because of bottleneck links to the storage apparatuses.

The communication bandwidth control technique disclosed in JP2006-108955 A performs load balancing for each iSCSI session between the server apparatus and the storage apparatus. In other words, JP2006-108955 A discloses load distribution in application data units, which are larger in granularity, at an upper level layer in a network layer model.

In order to preferably solve the above problems, an aspect of the present invention provides a method for controlling a communication bandwidth between network switches forming a network (for example, Fibre Channel switches), and storage apparatuses, in which, when communication congestion arises in a link between the network switches and the storage apparatuses, another link is used together with the congested link.

An aspect of the present invention provides a method for controlling a communication bandwidth between a network switch having a plurality of ports for forming a first network, and a storage apparatus having ports respectively connected to at least two of the ports, the method including: transferring one or more data frames to the storage apparatus via a first port of the network switch connected to the storage apparatus; determining whether or not an overflow has occurred in a first buffer memory associated with the first port during the transfer of the one or more data frames; identifying, if an overflow has occurred in the first buffer memory, a second port of the network switch connected to the storage apparatus; and transferring the one or more data frames to the storage apparatus via the first port and the second port.

Another aspect of the present invention provides a method for controlling a communication bandwidth between a network switch having a plurality of ports for forming a first network, and a storage apparatus having ports respectively connected to at least two of the ports, the method including: reading data from one or more disk devices in the storage apparatus and converting the data into one or more data frames; transferring the one or more data frames to the network switch via a first port of the storage apparatus connected to the network switch; determining whether or not an overflow has occurred in first buffer memory associated with the first port during the data frame transfer; identifying, if an overflow has occurred in the first buffer memory, a second port of the network switch connected to the storage apparatus; and transferring the one or more data frames to the network switch via the first port and the second port.

Another aspect of the present invention provides a storage system including a network switch and a storage apparatus connected via a first network, the network switch including: a plurality of ports having buffer memories for forming the first network; a channel management table that manages channel information about the plurality of ports; an overflow detection unit that detects the occurrence of any overflow in the buffer memories of the plurality of ports; a port identification unit that, upon detection of an overflow, identifies, as a second port, another port connected to a node the first port with the buffer memory with the overflow is connected to, by referring to the channel management table; a control unit that controls one or more paths for the one or more data frames so that the one or more data frames are transferred using the second port as well as the first port.

Aspects of the present invention allow load balancing between the Fibre Channel switches and the storage apparatuses to be efficiently performed, avoiding communication congestion, and maintaining high system performance.

Aspects of the present invention also make it possible to, as a result of performing load balancing in data frames or data packet units, which are smaller in granularity, more efficiently use the communication bandwidth, maintaining high system performance.

Other aspects and advantages of the invention will be apparent from the following description and the appended claims.

### Brief Description of the Drawings

FIG. 1 is a diagram showing a storage system according to an embodiment of the present invention.

FIG. 2 is a diagram showing the configuration of a channel adapter in a storage apparatus according to an embodiment of the present invention.

FIG. 3 is a diagram showing the configuration of a disk adapter in a storage apparatus according to an embodiment of the present invention.

FIG. 4 is a diagram showing the configuration of a Fibre Channel switch according to an embodiment of the present invention.

FIG. 5 is a diagram showing an example of a channel management table in a Fibre Channel switch according to an embodiment of the present invention.

FIGs. 6A and 6B are diagrams for explaining a Fibre Channel protocol data frame structure according to an embodiment of the present invention.

FIG. 7 is a diagram explaining the functions of a Fibre Channel switch according to an embodiment of the present invention.

FIG. 8 is a flowchart for explaining the operation of a Fibre Channel switch according to an embodiment of the present invention.

FIG. 9 is a flowchart for explaining the processing for correcting the order of data frames in a channel adapter according to an embodiment of the present invention.

FIG. 10 is a diagram for conceptually explaining the operation of a Fibre Channel switch according to an embodiment of the present invention.

FIG. 11 is a diagram for the operation of a Fibre Channel switch according to an embodiment of the present invention.

FIG. 12 is a flowchart for explaining the operation of a channel adapter according to an embodiment of the present invention.

FIG. 13 is a diagram for conceptually explaining communication bandwidth control in the storage system according to an embodiment of the present invention.

An embodiment of the present invention will be explained with reference to the drawings.

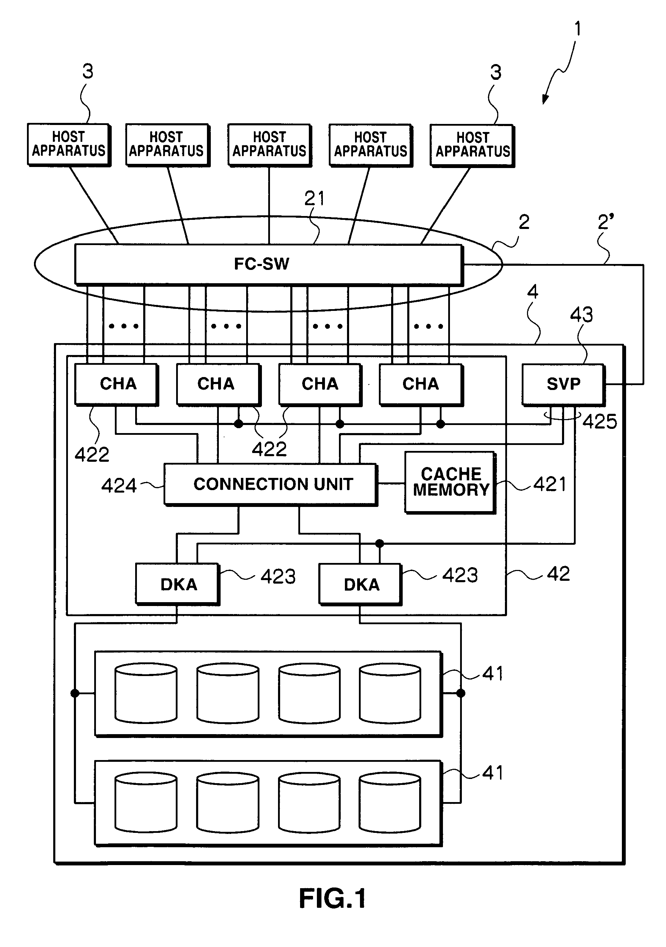

FIG. 1 is a diagram showing the configuration of a storage system 1 according to an embodiment of the present invention. As shown in FIG. 1, the storage system 1 includes host apparatuses 3 and a storage apparatus 4 connected via a network 2. The storage apparatus 4, for example, stores data according to write commands received from the host apparatuses 3, and also reads data according to read commands from the host apparatuses 3, and sends the data to the host apparatuses 3.

The network 2 is a SAN (FC-SAN) using, for example, a Fibre Channel. In other words, in an FC-SAN, data communications between the host apparatuses 3 and the storage apparatus 4 is performed according to Fibre Channel protocol. In this embodiment, the network 2 forms a fabric topology provided with at least one Fibre Channel switch (FC-SW) 21 that functions as a network switch (or router). In this case, the host apparatuses 3 and the storage apparatus 4 are regarded as nodes on the network 2. FIG. 1 shows only one Fibre Channel switch 21, but a plurality of Fibre Channel switches 21 may be provided on the network 2, and interconnected with each other. The Fibre Channel switch 21 may also be connected to a plurality of storage apparatuses 4. The Fibre Channel switch 21 includes, for example, eight ports that can respond to a transfer rate of 2G/bps, and the number of ports can be increased by adding blade boards. The specific configuration of the Fibre Channel switch 21 will be described later.

In the network 2, zoning, which is a fabric management service, may be configured. Zoning allows a subset of logical nodes in an FC-SAN to be formed, and as a result, logical paths between the host apparatuses 3 and the storage apparatus 4 are recognized as different paths, but may still be formed with one physical link.

Typically, the host apparatuses 3 are general-purpose personal computers, work stations, mainframe computers, or similar. The host apparatuses 3 may function as server computers for client computers not shown. For example, the host apparatuses 3 may function as server computers in a banking system or airplane seat reservation system, etc.

The storage apparatus 4 includes one or more disk devices 41, a controller unit 42 that controls access, like write access or read access to/from the disk devices 41, and a management apparatus (SVP) 43 for managing the storage apparatus 4. The disk devices 41 and the controller unit 42 are directly connected via an internal dedicated line, or may also be connected via an external network.

Each disk device 41 has a large-capacity storage medium like a magnetic disk or semiconductor device, and provides a storage area for storing data. The disk devices 41 may form a RAID (Redundant Arrays of Inexpensive Disks) configuration. The storage area provided by the disk devices 41 is defined as one or more logical volumes (LUs) using unique identifiers (LUNs: Logical Unit Numbers). Access to the volumes is performed in blocks of a predetermined size, and each block is provided with a logical block address (LBA: Logical Block Address). Consequently, a host apparatus 3 can access a desired block in a volume by designating a logical address, which consists of an identifier LUN and a logical block address LBA, to the controller unit 42 of the storage apparatus 4. The above information relating to the volumes is kept in the controller unit 42 as system configuration information.

The controller unit 42 includes a system board that collectively controls input/output processing between the host apparatuses 3 and the disk devices 41. More specifically, the controller unit 42 includes cache memory 421, a plurality of channel adapters (CHA) 422, and a plurality of disk adapters (DKA) 423. These modules are interconnected via a connection unit 424, which consists of, for example, a crossbar switch. These modules may be physically-independent modules, or arbitrarily may be an integrated module.

The cache memory 421 is mainly used for temporarily storing I/O data transferred between the host apparatuses 3 and the disk devices 41. For example, write data sent from a host apparatus 3 and data read from the disk devices 41 is temporally stored in the cache memory 421.

The channel adapters 422 are system circuits that function as communication interfaces that send/receive I/O access commands and data to/from the storage apparatuses 3 connected via the network 2. The channel adapters 422 are connected to internal communication lines 425 via the management apparatus 43, and can perform predetermined communications with the management apparatus 43. For example, a system administrator can install a microprogram or similar, which is executed by each channel adapter 422's processor 4221, in each channel adapter 422's memory 4222.

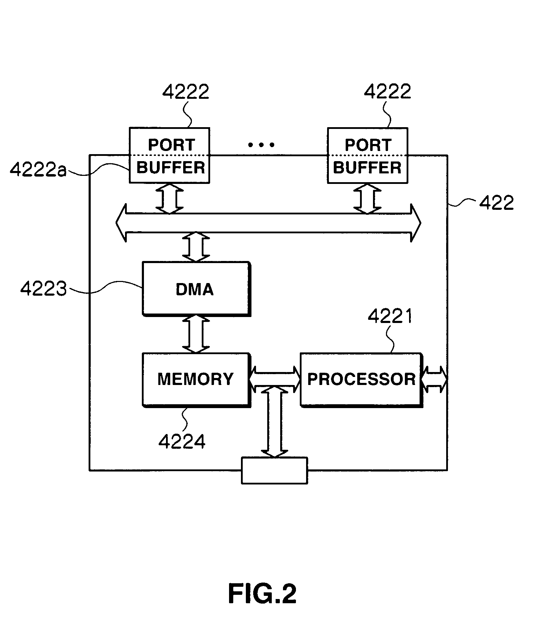

FIG. 2 is a diagram showing the configuration of a channel adapter 422 in the storage apparatus 4 according to an embodiment of the present invention. As shown in FIG. 2, a channel adapter 424 includes, for example, a microprocessor 4221, a plurality of ports 4222, a DMA 4223, and memory 4224.

The ports 4222, typically, are connected via optical fibers to the ports provided to the Fibre Channel switch 21. Each port 4222 has buffer memory 4222a to buffer data frames sent to/received from the Fibre Channel switch 21. The DMA 4223 controls data frame transfers between the buffer memories 4222a of the ports 4222, and the memory 4224. For example, the data frames sent from the Fibre Channel switch 21 and accumulated in the buffer memories 4222a are transferred to the memory 4224 under the control of the DMA 4223. The data frames transferred from the ports 4224 are initially arranged in the memory 4224 in their order of arrival.

The processor 4221 performs protocol conversion of the data frames kept in the memory 4224. In other words, for a data frame sent from the Fibre Channel switch 21, the processor 4221 removes the header, etc., and takes the I/O command and data from the data frame, and sends them to the connection unit 424. Also, the processor 4221 encapsulates data read from the disk devices 41 according to Fibre Channel protocol. In this embodiment, the processor 4221 checks the accuracy of the order of the data frames that have been sent from the Fibre Channel switch 21 and kept in the memory 4224, and when needed, rearranges (corrects) the order, and then performs protocol conversion for them. The processor 4221 monitors the buffer memory 4222a of each port 4222 for any overflow, and when an overflow is detected, controls the operation to use another port 4222 for data frame transfers as well as the port 4222 with the overflow.

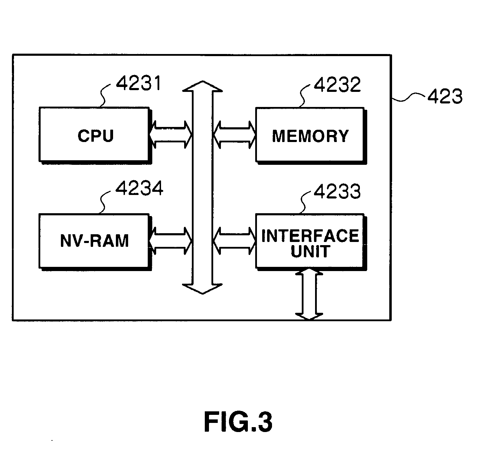

The disk adapters 423 (FIG. 1), as shown in FIG. 3, are system circuits, each including, for example, a microprocessor 4231, memory 4232, and a communication interface 4233, and functioning as an input/output interface that performs communication protocol control between itself and the disk devices 41. Each disk adapter 423 may also include nonvolatile memory 4234.

Referring back to FIG. 1, the connection unit 424 is, for example, a switch circuit that consists of a crossbar switch. The connection unit 424, while arbitrating the conflict between data to be input, shifts the paths for the data sequence to form an internal path between the transmission source module (e.g., a channel adapter 422), and the transmission destination module (e.g., a disk adapter 423). The connection unit 424 may also be connected to the management apparatus 43 via an internal communication line 425. The disk adapters 424 may be constructed so that they are not directly connected to the management apparatus 43, but communicate with the management apparatus 43 via the connection unit 424.

The management apparatus 43 is a terminal device using the management of the overall storage apparatus 4. For the management apparatus 43, a general-purpose computer is typically used, but it may also be a dedicated control terminal. A system administrator performs various settings for the storage apparatus 4 using the management apparatus 43. The management apparatus 43 includes a network board, and is connected to the Fibre Channel switch 21 via a management network 2'. Accordingly, the management apparatus 43 can perform communication with the Fibre Channel switch 21 independently of the FC-SAN. The management network 2', for example, is a TCP/IP-based LAN or WAN. In this embodiment, the network board in the management device 43 is a LAN board complying with Ethernet (registered trademark), and TCP/IP.

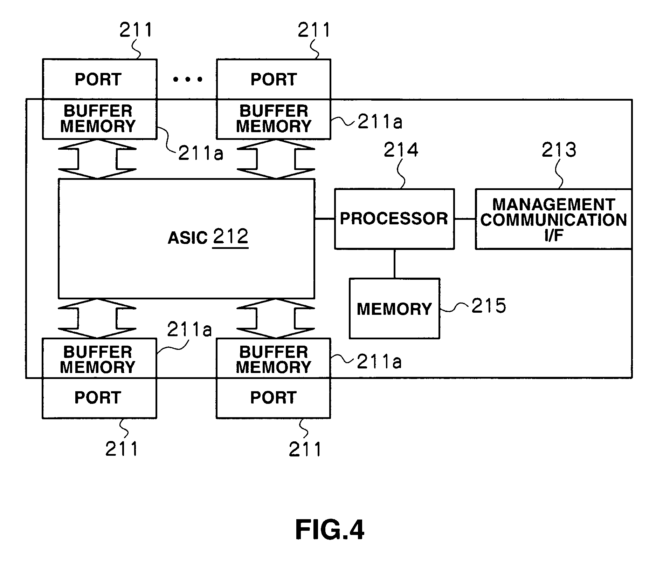

FIG. 4 is a diagram showing the configuration of the Fibre Channel switch 21 according to an embodiment of the present invention. As shown in FIG. 4, the Fibre Channel switch 21 includes ports 211, an ASIC 212, a processor 214, memory 215, and a management communication interface (I/F) 213.

The ports 211 are interfaces for connecting with the nodes, like the host apparatuses 3 and the storage apparatus 4, and other Fibre Channel switches 21. Each port 211 is provided with buffer memory 211 a. Each of the ports 211 is designed as, for example, "N_Port," "NL_Port," "F_Port," "FL_Port," "E_Port," or similar. For the fabric topology according to this embodiment, "N_Port" and "E_Port" are typically used. "N_Port" is a port for connecting with a node like a host apparatus 3 or storage apparatus 4, and "E_Port" is a port for connecting with another Fibre Channel switch 21.

The ASIC 212 is a circuit designed mainly for high-speed path selection (routing), and includes, for example, a crossbar switch, and a selector. The modules constituting the ASIC 212 conduct the processing for the ports 211. The ASIC 212 monitors buffer memories 211 a provided with the ports 211 for any overflow, and upon detection of an overflow, notifies the processor 214.

The management communication interface (I/F) 213 is a circuit for connecting with a management network 2' (e.g., LAN) for externally controlling the Fibre Channel switch 21. In this embodiment, the communication interface 213 is constructed as a LAN board that complies with Ethernet (registered trademark) and TCP/IP. A system administrator can, for example, configure the settings for the Fibre Channel switch 21 using a Web system from a computer on the LAN.

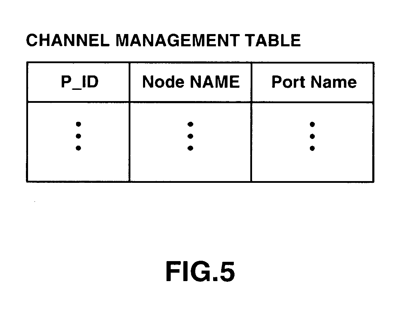

The processor 214 controls the overall operation of the Fibre Channel switch 21. For example, when the Fibre Channel switch 21 is powered on, the processor 214 executes an initial sequence to collect information relating to the nodes connected to the ports 211, and deploys it in the memory 215 as a channel management table. FIG. 5 is a diagram showing an example of the channel management table stored in the memory 215 in the Fibre Channel switch 21 according to an embodiment of the present invention. The channel management table includes channel information concerning which ports the respective ports 211 for the Fibre Channel switch 21 are connected to, and which nodes include the relevant ports. In other words, as shown in FIG. 5, in the channel management table, a node name "Node Name" and a port name "Port Name" are assigned for each of the ports 211 denoted by a port ID "P_ID." The node name "Node Name" is a WWN (World Wide Name) for the node connected to the relevant port 211, and the port name "Port Name" is the WWN for the port of the node. These WWNs are provided as unique values on the network 2.

The processor 214 executes a setting program stored in the memory 215 to control the Fibre Channel switch 21 so that a system administrator can configure the settings for the Fibre Channel switch 21 from the management apparatus 43 or a computer on the network. Also, as will be described later, the processor 213 checks the accuracy of the order of the data frames that have been read from the storage apparatus 4, loaded from the ports 211, and stored in the memory 222, and if needed, corrects the order.

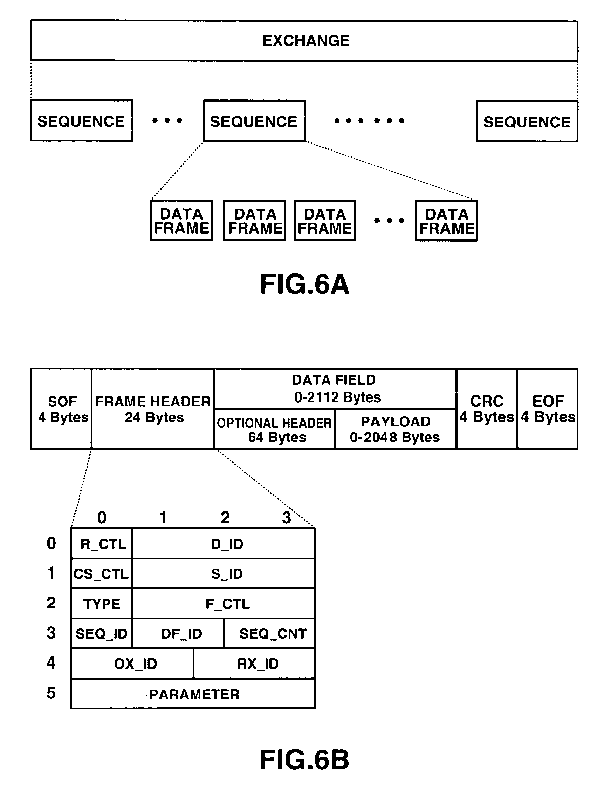

FiGs. 6A and 6B are diagrams for explaining a Fibre Channel protocol data frame structure according to an embodiment of the present invention. As shown in FIG. 6A, one operation (I/O access) is processed as a unit called "exchange," which consists of a collection of some sequences. Each sequence consists of some data frames.

As shown in FIG. 6B, a data frame starts with an SOF (Start Of Frame) code, and ends with an EOF (End Of Frame) code. Also, a data frame has a frame header, storing various kinds of header information. The Fibre Channel switch 21 and the nodes on the network, referring to the frame header, determine the data frame transmission source and destination based on the transmission source ID "S_ID" and the transmission destination ID "D_ID", and also determines which operation the data frames belong to based on the sequence ID "SEQ_ID" and the sequence count "SEQ_CNT".

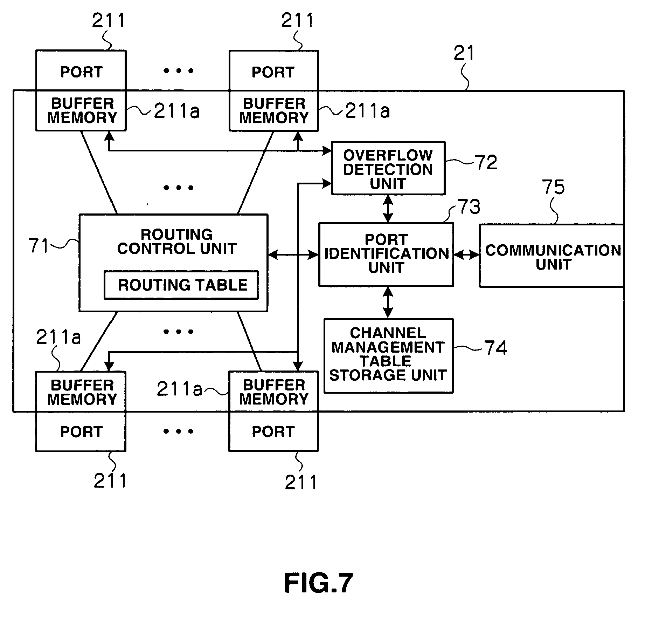

FIG. 7 is a diagram for explaining the functions of the Fibre Channel switch 21 according to an embodiment of the present invention. The segments in FIG. 7 operate by the cooperation of hardware and software in the Fibre Channel switch 21 shown in FIG. 4. The elements identical or equivalent to those in FIG. 4 have the same reference numerals.

In other words, as shown in FIG. 7, a routing control unit 71, with reference to a routing table, shifts the paths based on the header frame of a data frame input from the buffer memory 211 a of a port 211, and outputs the data frame. An overflow detection unit 72 monitors the buffer memories 211 a for any overflow. The overflow detection unit 72, upon detection of an overflow, notifies a port identification unit 73. The port identification unit 73, upon receipt of a notice from the overflow detection unit 72 to the effect that an overflow has occurred, referring to the channel management table stored in the channel management table storage unit 74, identifies another port 211 connected to the same node (i.e., in this case, the storage apparatus 4) the port 211 of the buffer memory 211 a with the overflow is connected to, and notifies the routing control unit 71. The port identification unit 73 notifies the communication unit 75 of the identified other port 211 to notify the storage apparatus 4 of the same. The communication unit 75 notifies, via the management network 2', the storage apparatus 4's management apparatus 43 of the start of an extended data transfer mode using the identified other port 211.

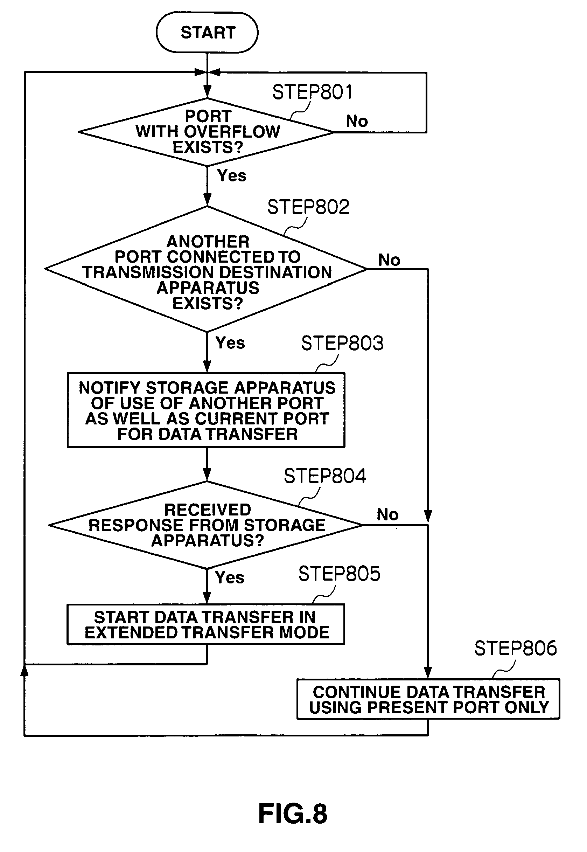

FIG. 8 is a flowchart for explaining the operation of the Fibre Channel switch 21 according to an embodiment of the present invention. As shown in FIG. 1, the Fibre Channel switch 21, during operation, monitors the ports 211's buffer memories 211 a to check whether or not any overflow has occurred (STEP801). If there is a port 211 (x) with an overflow (STEP801:Yes), the Fibre Channel switch 21 checks whether or not there is any port 211 (y) connected to the same storage apparatus the port 211 (x) is connected to (STEP802). More specifically, the Fibre Channel switch 21, referring to the channel management table kept in the memory 215, extracts the node name for the node connected to the port 211 (x) with the overflow, and checks whether or not there are any port IDs having the same node name.

The Fibre Channel switch 21, upon extraction of a port ID provided with the same node name as that of the port 211 (x) with the overflow, sends the storage apparatus 4 a request for permission for an extended data transfer mode using the port 211(y) denoted by that port ID (STEP803). The extended data transfer mode here means a mode in which data frames are transferred using the port 211 (x) with the overflow as well as the port 211 (y) denoted by the extracted port ID. In other words, in the extended data transfer mode, data frames are physically transferred via a plurality of links, but can be considered as being logically transferred on one path. The Fibre Channel switch 21 sends that permission request via the TCP/IP-based management network 2'. The storage apparatus 4's management apparatus 43, upon receipt of the permission request, notifies the relevant channel adapter 422, and sends the Fibre Channel switch 21 a response indicating that permission is granted.

The Fibre Channel switch 21, upon receipt of that response from the storage apparatus 4 via the management network 2' (STEP804: Yes), starts data transfer using that new port 211 (y) as well as the current port 211 (x) (STEP805). Meanwhile, if the Fibre Channel switch 21 receives no response indicating that permission is granted within a predetermined period of time (STEP804: No), it continues data transfer using the current port 211 (x) only (STEP806).

In the extended data transfer mode, each of the ports 211 independently transfers data frames to the storage apparatus 4, so the recipient storage apparatus 4's channel adapters 422 check the arrived data frames with regard to the accuracy of the order, and if needed, correct the order.

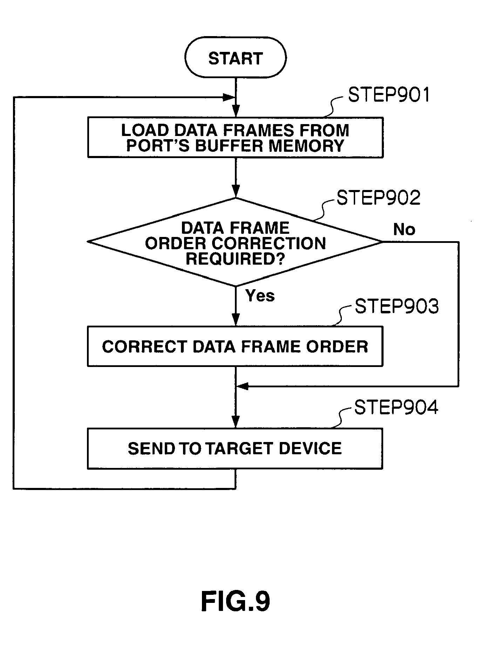

FIG. 9 is a flowchart for explaining the processing for correcting the order of the data frames in the channel adapter 422 according to an embodiment of the present invention. A channel adapter 422, upon receipt of a permission request for extended data transfer mode from the Fibre Channel switch 21, starts the processing to correct the data frame order.

In other words, as shown in FIG. 9, the channel adapter 422, each time a data frame has arrived at the buffer memories 4222a in the ports 4222, loads it and then transfers it to the memory 4224 (STEP901). The channel adapter 422 then checks the data frames kept in the memory 4224 regarding whether or not a correction is necessary (STEP902). More specifically, the channel adapter 422 checks the order denoted by the "SEQ_ID" (for example, ascending order) for the data frames having the same "S_ID" and "D_ID." The channel adapter 422, upon detection of a data frame not arranged in that order, corrects the order of the data frames (STEP903). The channel adapter 422 sequentially sends a series of data frames kept in the memory from the top so that they are transferred to the target device (STEP904). In that case, the channel adapter 422 may, while checking the accuracy of the data frame order, sequentially send the checked data frames to the target device.

As described above, in the Fibre Channel switch 21, upon occurrence of an overflow in the buffer memory 211 a of a particular port 211, data transfers are conducted using both the port 211 with the overflow and another port 211 connected to the same storage apparatus 4 the port 211 with the overflow is connected to. As a result, communication congestion between the Fibre Channel switch 21 and the storage apparatus 4 is avoided, making it possible to maintain high system performance.

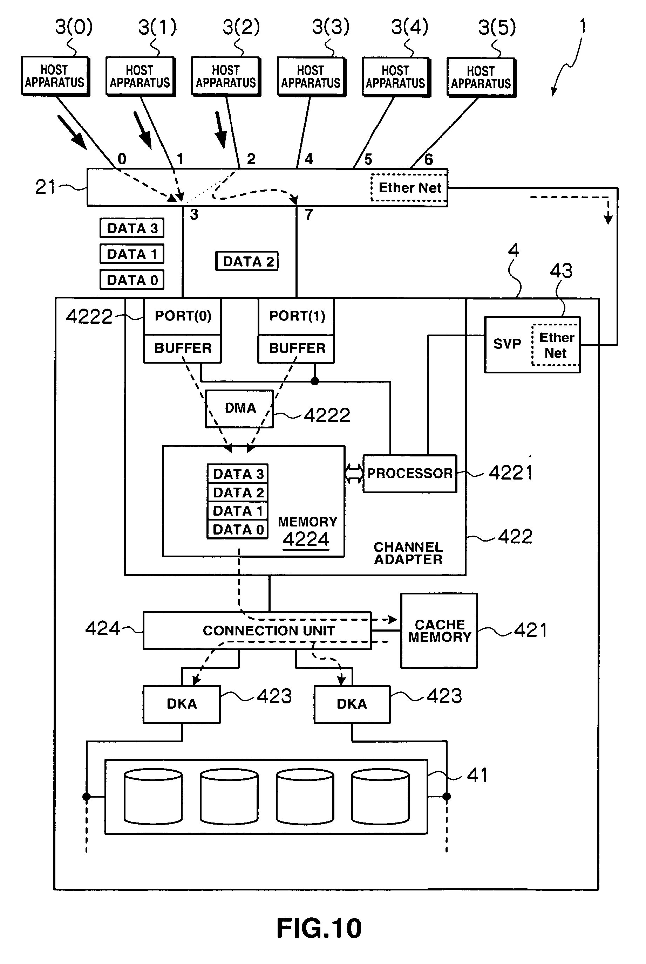

FIG. 10 is a diagram for conceptually explaining communication bandwidth control between the Fibre Channel switch 21 and the storage apparatus 4 included in the storage system 1 according to an embodiment of the present invention.

As shown in FIG. 10, the plurality of host apparatuses 3 and the storage apparatus 4 are connected via the Fibre Channel switch 21. More specifically, the Fibre Channel switch 21 has eight ports 211 (0) to 211 (7), and the ports 211 (0) to 211 (2) and 211 (4) to 211 (6) are connected to the host apparatuses 3(0) to 3(5). The ports 211 (3) to 211 (7) are connected to the ports 4222(0) and 4222(1) in the storage apparatus 4's channel adapter 422. As the initial settings, the ports 211 (0) and the ports 211 (2) of the Fibre Channel switch 21 are associated with the port 4222(0) of the channel adapter 422 connected to the port 211 (3).

Communication congestion may occur in the Fibre Channel switch 21, for example, when data frames are transferred around the same time from a plurality of host apparatuses 3 to the same target node (storage apparatus 4), or when the transfer rate on the host apparatus 3 side and the transfer rate on the storage apparatus 4 side do not match each other.

Here, it is assumed that the host apparatuses 3(0) to 3(2) send I/O access requests at substantially the same time to the storage apparatus 4 via their respective ports 211 (0) to 211 (2), and that data frames have overflowed in the port 211 (3). The Fibre Channel switch 21, upon detection of the overflow, referring to the channel management table, identifies the port 211 (7) connected to the same storage apparatus 4 the port 211 (3) is connected to, and sends a permission request for extended data transfer mode using the port 211(7) to the storage apparatus 4's management apparatus 43 via the management network 2'. The management apparatus 43 notifies the channel adapter 422 of the start of the extended data transfer mode using the port 4222(1) connected to the port 211 (7), and sends the Fibre Channel switch 21 a response indicating that permission is granted. The Fibre Channel switch 21, upon receipt of that response from the management apparatus 43, changes the internal routing so that the data frames retained in the buffer memory 211 a without being sent out from the port 211 (3) are sent from the port 211 (7).

Meanwhile, in the storage apparatus 4, the data frames that have arrived at the ports 4222(0) and 4222(1) and have been buffered in the respective buffer memories 4222a are transferred to the memory 4224 and stored there under the control of the DMA. The processor 4221, upon notification of the start of the extended transfer mode by the management apparatus 43, checks the accuracy of the order of the data frames kept in the memory 4224, and if the order of arrival for the data frames is different from that order, corrects the order, and then performs protocol conversion. The post-protocol conversion data is written to the cache memory 421, and stored in a predetermined storage area in the disk devices 41 under the control of the disk adapter 423. When the disk adapter 423 has written the data to the predetermined area in the disk devices 41, it notifies the host apparatus 3 of the end of the I/O access request.

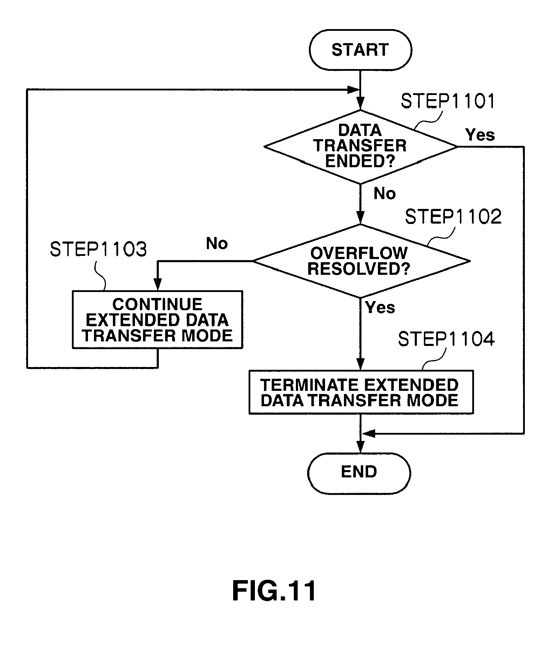

FIG. 11 is a diagram for explaining the operation of the Fibre Channel switch 21 according to an embodiment of the present invention. More specifically, FIG. 11 describes the processing for determining the end of the extended data transfer mode after the transition to the extended data transfer mode.

In other words, as shown in FIG. 11, the Fibre Channel switch 21 determines whether or not the transfer of data according to I/O access from a host apparatus 3 has been completed (STEP1101). If the Fibre Channel switch 21 determines the data transfer as having been completed, it terminates the processing relating to that I/O access.

In contrast, if the Fibre Channel switch 21 determines the data transfer as not having been completed yet, it determines whether or not the overflow in the port 211 has resolved itself (STEP1102). In that case, it is preferable that the Fibre Channel switch 21 does not determine at a certain point in time whether or not the overflow has resolved itself, but determines it based on the data frame transfer amount for a period of time immediately prior. The processor 214 in the Fibre Channel switch 21 calculates a statistical value relating to data frame transfer, and if that value is below a predetermined threshold value, determines the overflow as having dissolved itself.

If the overflow has not resolved itself, the Fibre Channel switch 21 continues the extended data transfer mode (STEP1103). Meanwhile, when the Fibre Channel switch 21 determines the overflow as not having resolved itself, it terminates the extended data transfer mode and releases the port 211 (STEP1104).

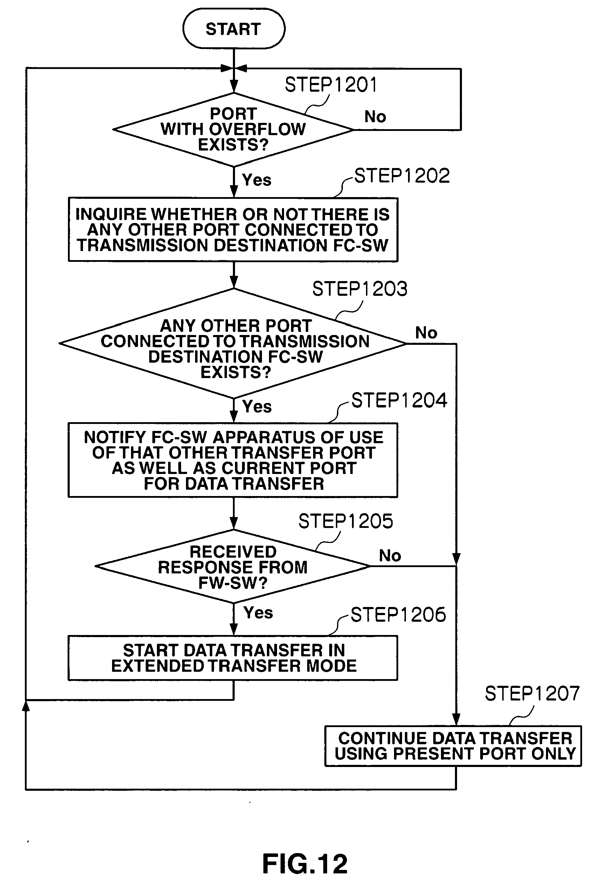

FIG. 12 is a flowchart for explaining the operation of a channel adapter 422 according to an embodiment of the present invention. More specifically, FIG. 12 explains the processing for sending to the network 2 data read from the disk devices 41 based on a read request from a host apparatus 3.

As shown in FIG. 12, the channel adapter 422 monitors the buffer memories 4222a of the ports 4222 to check whether or not any overflow has occurred (STEP1201). When a port 4222(x) with an overflow exists, the channel adapter 422 inquires of the Fibre Channel switch 21 whether or not there is any port 4222(y) connected to the same Fibre Channel switch 21 that port 4222(x) is connected to (STEP1202). More specifically, the channel adapter 422 makes a request to the management apparatus 43 to send the relevant inquiry request, and the management apparatus 43, upon receipt of the request, sends the inquiry request to the Fibre Channel switch 21 via the management network 2'.

The Fibre Channel switch 21, upon receipt of the inquiry request, and referring to the channel management table, extracts the node name for the node connected to the port 211 corresponding to the port 4222(x) with the overflow, and checks whether or not any port ID with the same node name exists. The Fibre Channel switch 21, upon extraction of a port ID with the same node name as that for the port 211 associated with the port 4222(x) of the channel adapter 422 with the overflow, sends the port ID to the storage apparatus 4.

The channel adapter 422, upon receipt of the port ID from the Fibre Channel switch 21 (STEP1203: Yes), sends the Fibre Channel switch 21 a permission request for extended data transfer mode using the port 4222(y) denoted by that port ID (STEP1204). The management apparatus 43, upon receipt of the permission request from the channel adapter 422, sends it via the TCP/IP-based management network 2'. The Fibre Channel switch 21, upon receipt of the permission request, sends the channel adapter 422 a response indicating that permission is granted.

If the channel adapter 422 receives no port ID from the Fibre Channel switch 21 (STEP1203: No), it continues data transfer using the current port 4222(x) only (STEP1207).

The channel adapter 422, upon receipt of the response indicating that the permission is granted from the Fibre Channel switch 21 via the management network 2' (STEP1025: Yes), starts data transfer using that new port 4222(y) as well as the current port 4222(x) (STEP1206). Meanwhile, if the Fibre Channel switch 21 receives no such response within a predetermined period of time (STEP1204: No), it continues data transfer using the current port 4222(x) only (STEP1207).

As described above, in the above extended data transfer mode, data frames are transferred to the Fibre Channel switch 21 via the respective ports 4222 independently, so the recipient Fibre Channel switch 21 may not always receive the data frames in the correct order. In this embodiment, the Fibre Channel switch 21, under the control of the processor 214, also checks arrived data frames for the accuracy of that arrival order, and where necessary, corrects the order of the data frames. The explanation of the order correction processing in the Fibre Channel switch 21 will be omitted because it is the same as that in the channel adapters 422.

Thus, the channel adapter 422, upon occurrence of an overflow in the buffer memory 422a of a particular port 4222, performs data transfer using another port 4222 connected to the same Fibre Channel switch 21 the port 4222 with the overflow is connected to, as well as the port 4222 with the overflow. Consequently, communication congestion will be avoided between the Fibre Channel switch 21 and the storage apparatus 4, maintaining high system performance.

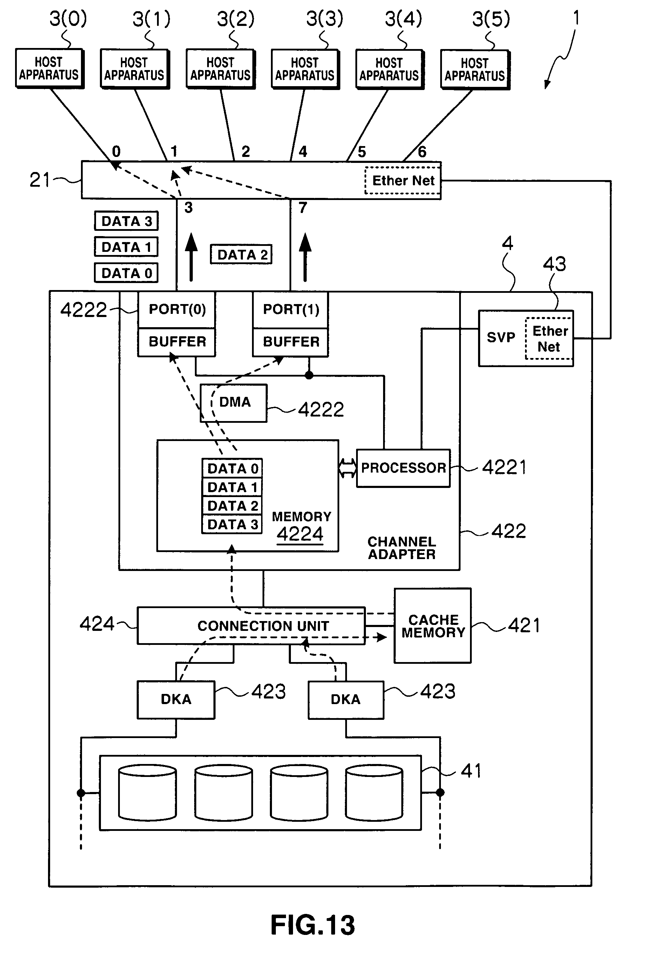

FIG. 13 is a diagram for conceptually explaining communication bandwidth control between the Fibre Channel switch 21 and the storage apparatus 4 included in the storage system 1 according to an embodiment of the present invention. FIG. 13 explains the case where an overflow has occurred in a port 4222 of a channel adapter 422.

It is assumed that the host apparatuses 3(0) and 3(1) send read requests to the storage apparatus 4 via their respective ports 211 (0) and 211 (1) at substantially the same time. The storage apparatus 4 reads the requested data from the disk devices 41 according to the read requests, and sends the data from the port 4222(0) of the channel adapter 422, but an overflow of data frames has occurred in the port 4222(0). The channel adapter 422, upon detection of this overflow, notifies the management apparatus 43, and the management apparatus 43 inquires of the Fibre Channel switch 21 via the management network 2' whether or not there is any port 4222 connected to the same Fibre Channel switch 21 the port 4222(0) is connected to.

In response to this inquiry, the Fibre Channel switch 21, referring to the channel management table, identifies the port 4222(1) connected to the same storage apparatus 4 the port 4222(0) is connected to, and sends the port ID for that port 4222(1) to the management apparatus 43 in the storage apparatus 4 via the management network 2'. The management apparatus 43 notifies the channel adapter 422 of that port ID, and the channel adapter 422 sends a permission request for extended transfer mode to the management apparatus 43, and the management apparatus 43 sends it to the Fibre Channel switch 21 via the management network 2'. The Fibre Channel switch 21, in response to the permission request, sends a response indicating that permission is granted, to the channel adapter 422 via the management network 2'. The channel adapter 422, upon receipt of this response, reads the data frames from the memory 4224 and sends them to the port 4222(1).

Meanwhile, in the Fibre Channel switch 21, the data frames arrived at the ports 211 (3) and 211 (7) and buffered in their respective buffer memories 211 a are transferred to and held in the memory 215. The processor 214, upon having been notified by the management apparatus 43 of the start of the extended transfer mode, checks the accuracy of the order of the data frames held in the memory 215, and if the arrived data frames are not in the right order, corrects the order of the data frames and then sends them to the target node.

During the above-described operation in the storage apparatus 4, the channel adapter 422 makes an inquiry request targeting the Fibre Channel switch 21, but the inquiry request targeting the Fibre Channel switch 21 may be one that also serves as a permission request. In that case, the communication procedure between the Fibre Channel switch 21 and the channel adapter 422 can be reduced, achieving quicker extended data transfer mode transition.

The above embodiment is an example for explaining the present invention, and the present invention is not limited to that embodiment. The above embodiment relates to a storage system 1 in which a Fibre Channel switch 21 is arranged between host apparatuses 3 and storage apparatus(es) 4. But, for example, a configuration in which a Fibre Channel switch 21 is arranged between storage apparatuses 4 may also be employed.

In the above embodiment, as shown in FIGs. 10 and 13, two ports 211 in the Fibre Channel switch 21 are connected to the same storage apparatus 4, but the number of ports 211 may be three or more. In that case, the Fibre Channel switch 21 may make a transition to an extended transfer mode using the unused ports 211 at one time, or using the unused ports 211 one by one in order.

As a result of the various configurations described in detail above, embodiments of the invention may include one or more following advantages, some of which have been discussed above.

In the storage system and communication bandwidth control method according to an embodiment of the present invention, upon occurrence of an overflow in a Fibre Channel switch port, data transfer can be conducted using another port connected to the same storage apparatus the port with the overflow is connected to, as well as the port with the overflow. Consequently, load balancing is performed between the Fibre Channel switch and the storage apparatus 4, making it possible to avoid communication congestion and maintain high system performance.

Also, for example, when an overflow has occurred in a port of a channel adapter during data reading, data transfer can be conducted using another port connected to the same Fibre Channel switch the port with the overflow is connected to, as well as the port with the overflow. Consequently, load balancing is performed between the Fibre Channel switch and the storage apparatus, making it possible to avoid communication congestion and maintain high system performance.

Furthermore, in the storage system and communication bandwidth control method according to an embodiment of the present invention, load balancing is performed in data frames or data packets, which are smaller in granularity, making it possible to use communication bandwidths more efficiently and maintain high system performance.

The present invention can be applied to a SAN including Fibre Channel switches and storage apparatuses.

While the invention has been described with respect to a limited number of embodiments, those skilled in the art, having benefit of this disclosure, will appreciate that other embodiments can be devised that do not depart from the scope of the invention as disclosed herein. Accordingly, the scope of the invention should be limited only by the attached claims.

## Claims

1. A method for controlling a communication bandwidth between a network switch having a plurality of ports for forming a first network, and a storage apparatus having ports respectively connected to at least two of the ports, the method comprising:
transferring one or more data frames to the storage apparatus via a first port of the network switch connected to the storage apparatus;
determining whether or not an overflow has occurred in a first buffer memory associated with the first port during the transfer of the one or more data frames;
identifying, if an overflow has occurred in the first buffer memory, a second port of the network switch connected to the storage apparatus; and
transferring the one or more data frames to the storage apparatus via the first port and the second port.

2. The control method according to claim 1, wherein:
the network switch has a channel management table that manages channel information relating to the plurality of ports; and
the identification of the second port includes identifying another port connected to the storage apparatus the first port is connected to, by referring to the channel management table.

3. The control method according to claim 2, wherein the channel management table includes the correspondence between the at least two ports, the storage apparatus as a node connected to the at least two ports, and the ports of the node.

4. The control method according to any one of claims 1 to 3, further comprising sending the storage apparatus a permission request for data frame transfer via the identified second port.

5. The control method according to claim 4, wherein the sending includes sending the permission request via the second network connecting the network switch and the storage apparatus.

6. The control method according to claim 4 or claim 5, further comprising the storage apparatus sending a response indicating that permission is granted, to the network switch in response to the permission request.

7. The control method according to any one of claims 1 to 6, further comprising:
checking the order of the one or more data frames transferred to the storage apparatus via the first port and the second port; and
re-arranging the order of the one or more data frames based on the result.

8. The control method according to claim 7, further comprising sending the rearranged one or more data frames to a target device indicated by the one or more data frames.

9. A method for controlling a communication bandwidth between a network switch having a plurality of ports for forming a first network, and a storage apparatus having ports respectively connected to at least two of the ports, the method comprising:
reading data from one or more disk devices in the storage apparatus and converting the data into one or more data frames;
transferring the one or more data frames to the network switch via a first port of the storage apparatus connected to the network switch;
determining whether or not an overflow has occurred in first buffer memory associated with the first port during the data frame transfer;
identifying, if an overflow has occurred in the first buffer memory, a second port of the network switch connected to the storage apparatus; and
transferring the one or more data frames to the network switch via the first port and the second port.

10. The control method according to claim 9, wherein the identification of the second port includes inquiring of the network switch whether another port connected to the network switch connected to the first port exists or not.

11. The control method according to claim 10, wherein the network switch has a channel management table managing channel information relating to the plurality of ports, and, referring to the channel management table, identifies, as a second port, the other port connected to the network switch the first port is connected to.

12. The control method according to claim 10 or claim 11, wherein the inquiry includes the storage apparatus making an inquiry to the network switch via a second network.

13. A storage system including a network switch and a storage apparatus connected via a first network, the network switch comprising:
a plurality of ports having buffer memories for forming the first network;
a channel management table that manages channel information about the plurality of ports;
an overflow detection unit that detects the occurrence of any overflow in the buffer memories of the plurality of ports;
a port identification unit that, upon detection of an overflow, identifies, as a second port, another port connected to a node the first port with the buffer memory with the overflow is connected to, by referring to the channel management table;
a control unit that controls one or more paths for the one or more data frames so that the one or more data frames are transferred using the second port as well as the first port.

14. The storage system according to claim 13, further comprising:
a communication unit that sends the storage apparatus a permission request for data frame transfer using the identified second port.

15. The storage system according to claim 14, wherein the communication unit sends the permission request via the second network.

16. The storage system according to claim 14 or claim 15, wherein the storage system sends a response indicating that permission is granted, to the network switch in response to the permission request.

17. The storage system according to any one of claims 13 to 16, wherein the storage system checks the order of the one or more data frames transferred from the first port and the second port, and based on the result, re-arranges the order of the data frames.
